# EUROPÄISCHE PATENTSCHRIFT

(11) **EP 1 484 536 B1**
(45) Veröffentlichungstag und Bekanntmachung des Hinweises auf die Patenterteilung: **26.07.2006**
(21) Anmeldenummer: 04002629.6
(22) Anmeldetag: 06.02.2004
(51) Int. Cl.: F16K 11/074

(54) **Mischarmatur**
Mixing valve
Robinet mélangeur

(30) Priorität: 06.06.2003 DE 20308906 U
(43) Veröffentlichungstag der Anmeldung: 08.12.2004
(73) Patentinhaber: Flühs Drehtechnik GmbH, D-58515 Lüdenscheid (DE)
(72) Erfinder: Thurau, Friedrich, 58515 Lüdenscheid (DE); Schwarzer, Peter, 58515 Lüdenscheid (DE); Vom Dahl, Uwe, 58511 Lüdenscheid (DE)
(74) Vertreter: Dörner, Lothar

(56) Entgegenhaltungen:
- DE-C- 583 085
- DE-C- 19 635 614
- FR-A- 2 178 384
- FR-A- 2 565 658
- US-A- 2 633 872
- US-A- 4 074 697
- US-A- 4 770 392

## Beschreibung

Die Erfindung betrifft eine Mischarmatur mit einem Mischergehäuse, in dem zwei drehbare Spindeln angeordnet sind, deren Drehwinkel durch Anschläge begrenzt sind und die jeweils mit einer Steuerscheibe im Eingriff stehen, welche jeweils mit einer drehfesten Einlassscheibe in Berührung steht, die mindestens eine Durchtrittsöffnung aufweist,

Mit Hilfe von Mischarmaturen wird der Austritt von Medien aus Armaturen gesteuert. Bei Kalt- und Warmwasser-Mischarmaturen sind Ausführungen sowohl mit zwei Drehverschlüssen als auch mit Einhandhebelmischer bekannt. Armaturen mit zwei Drehverschlüssen haben den Vorteil, dass eine deutliche Trennung zwischen Warm- und Kaltwasserdosierung besteht Sie sind jedoch entweder nur mit zwei Händen oder einhändig durch umgreifen zu bedienen. Außerdem fehlt in der Regel eine optische Orientierung hinsichtlich des erzielten Mischungsverhältnisses. Einhandhebelmischer ermöglichen eine gleichzeitige Dosierung des Kalt- und Warmwasserzulaufs, wobei das Mischungsverhältnis in der Regel durch Drehen des Hebels verändert wird und die Dosierung der Wassermenge durch eine Hebelneigung erfolgt. Dabei kann eine Drehung sowie eine Neigung des Hebels gleichzeitig erfolgen. Diese gleichzeitige Steuerung der Wassermenge sowie des Mischungsverhältnisses durch eine dreidimensionale Hebelbewegung hat zur Folge, dass häufig ein ruckartiges Öffnen der Wasserzufuhr mit extremer Wassertemperatur (sehr heiss/sehr kalt) zu beobachten ist.

Eine Armatur der eingangs genannten Art ist aus DE 196 35 614 C1 bekannt. Die bekannte Armatur weist ein Gehäuse auf, in dem zwei Kammern ausgebildet sind. Die Kammern nehmen zwei Ventilabsperrglieder auf, die von ortsfesten Scheiben und drehbaren Scheiben gebildet sind, die jeweils mindestens eine Durchgangsöffnung aufweisen. Die Ventilabsperrglieder sind durch ein gemeinsames Betätigungsglied mittels eines Zahntriebs durch Drehung um parallele Achsen betätigbar. Der Drehwinkel des Betätigungsgliedes ist durch einen Ansatz begrenzt.

Aus US-A 4 074 697 ist weiterhin eine Mischarmatur bekannt, die ein Gehäuse und zwei Betätigungsgriffe aufweist. An der Armatur ist ein Montagegewindeschaft, der Zulaufleitungen aufnimmt, und koaxial zu Ausläufen ein Innenteil vorgesehen, das mit einem Außengewinde versehen ist, auf welches eine Ventilschaftnuss aufgeschraubt ist. Da die Nuss axial fest montiert ist, erfolgt bei Betätigung der Griffe eine axiale Bewegung eines drehfesten Ventilschaftes. In Abhängigkeit der Bewegungsrichtung der Griffe bewegt sich der Ventilschaft mit seinem Innenteil in Richtung eines Auslaufs bzw. in die abgewandte Richtung. Schließlich ist aus US-A 4 770 392 ein Schalter bekannt, der ein zylinderförmiges Gehäuse und ein drehbares Ventil aufweist. Für das Ventil ist ein Antriebsschaft vorgesehen, der das Gehäuse durchdringt; außerdem ein Sitz in dem Gehäuse. Auf dem Antriebsschaft ist ein ringförmiges Rad vorgesehen, welches bewegbare Führungen aufweist. In dem Ringrad ist eine Ventilzunge geführt, die mit dem Antriebsschaft durch ein Getriebe verbunden ist, welches die Ventilzunge auf ihren Sitz gedrückt hält. Wenn der Antriebsschaft sich zurückbewegt, hebt das Getriebe die Ventilzunge axial aus dem Sitz hoch, bis die Ventilzunge an dem Ringrad gehalten ist.

Mit der Erfindung soll eine Mischarmatur der gattungsgemäßen Art so ausgebildet werden, dass einerseits eine komfortable Einhandbedienung ermöglicht und das Mischungsverhältnis der Medien deutlich angezeigt wird, andererseits eine zuverlässige Bewegungsübertragung von den Griffen auf die Spindel hervorgerufen und eine kostengünstige Herstellung wegen des Verzichts auf die Erstellung von Verzahnungen ermöglicht ist. Zudem soll bei geringem Kraftaufwand eine ruckfreie Betätigung ermöglicht werden. Gemäß der Erfindung wird diese Aufgabe durch die Merkmale des Patentanspruchs 1 gelöst.

Mit der Erfindung ist eine Mischarmatur geschaffen, die eine komfortable Einhandbedienung ermöglicht und darüber hinaus das Mischungsverhältnis der Medien deutlich anzeigt. Da die Spindeln mit Bohrungen zur Aufnahme von Kugelstiften versehen sind, die in Kugelsitze der Antriebskränze fassen, ist eine zuverlässige Bewegungsübertragung von den Griffen auf die Spindeln hervorgerufen. Zudem ist eine kostengünstige Herstellung möglich und eine Betätigung mit geringem Kraftaufwand realisierbar. Die Bewegungsübertragung erfolgt ruckfrei, da keine ineinander greifenden Zungen vorhanden sind.

In Weiterbildung der Erfindung sind die Anschläge auf dem äußeren Bereich des Mischergehäuses angeordnet. Hierdurch ist gewährleistet, dass die Griffe genau übereinander liegen und einen Drehwinkel von 60° oder 40° haben.

In Ausgestaltung der Erfindung sind die Anschläge durch Pass- oder Kerbstifte gebildet. Bevorzugt sind diese in Bohrungen eines Körpers eingesetzt. Hierdurch sind auf einfache und damit preiswerte Art und Weise Anschläge zur Drehbegrenzung hervorgerufen.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die dreidimensionale Darstellung einer Mischarmatur;
- Figur 2: die in Figur 1 dargestellte Mischarmatur im Längsschnitt;

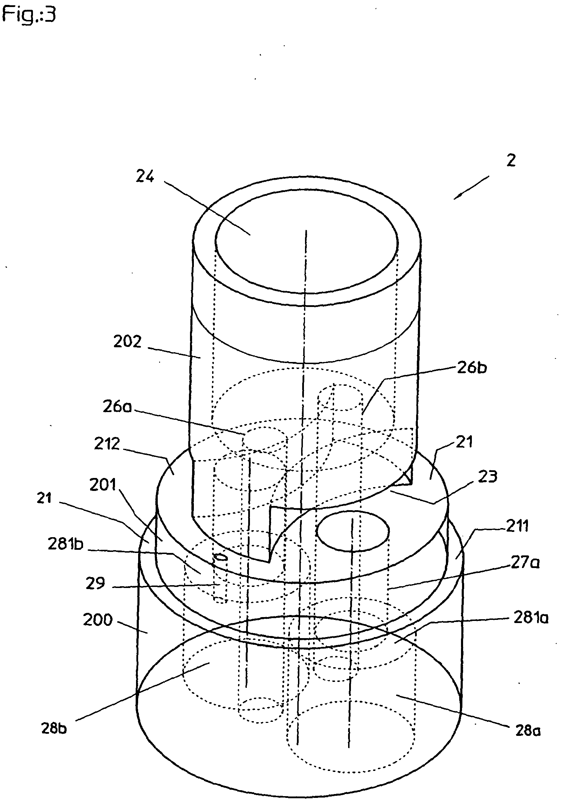

- Figur 3: das Mischergehäuse der Mischarmatur in einer dreidimensionalen Darstellung;
- Figur 4: den Schnitt entlang der Linie II-II in Figur 2 (Ventile geschlossen);
- Figur 5: den Schnitt entlang der Linie II-II in Figur 2 (Ventile offen);

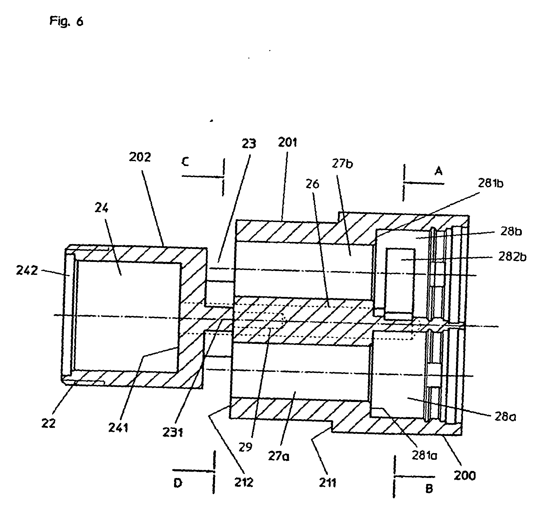

- Figur 6: das Mischergehäuse der Mischarmatur im Längsschnitt;
- Figur 7: das Mischergehäuse gemäß Figur 6 in der Draufsicht;
- Figur 8: das Mischergehäuse gemäß Figur 6 in der Untersicht;
- Figur 9: den Schnitt entlang der Linie A-B in Figur 6;
- Figur 10: den Schnitt entlang der Linie C-D in Figur 6;
- Figur 11: den Schnitt entlang der Linie E-F in Figur 8;
- Figur 12: die in Figur 1 dargestellte Mischarmatur in anderer Ausgestaltung im Längsschnitt;
- Figur 13: den Schnitt entlang der Linie III-III in Figur 12 (Ventile geschlossen) und
- Figur 14: den Schnitt entlang der Linie III-III in Figur 12 (Ventile offen).

Die als Ausführungsbeispiel gewählte Mischarmatur 1 besteht aus einem Mischergehäuse 2, in das zwei Spindeln 3a, b eingesetzt sind. Zur Betätigung sind an der Mischarmatur zwei Drehhebel 4a, b vorgesehen, deren Bewegung formschlüssig auf die Spindeln übertragbar ist. An seinem einen Ende ist in das Mischergehäuse 2 teilweise ein Lotnippel 5 eingesetzt, der über eine Kopfmutter 6 gehalten ist und an dem ein Auslaufrohr 7 angeordnet ist. An ihrem dem Auslaufrohr 7 abgewandten Ende steht die Mischarmatur mit einem Flansch 8 in Verbindung.

Das Mischergehäuse 2 ist rotationssymmetrisch ausgeführt. Es besteht aus einem Körper 20, der aus drei übereinander angeordneten Zylindern 200, 201, 202 aufgebaut ist. Die Zylinder 200, 201, 202 weisen unterschiedliche Durchmesser auf, wobei der dem Flansch 8 zugewandten Zylinder 200 den grössten Durchmesser aufweist, der mittlere Zylinder 201 einen im Verhältnis zum Zylinder 200 kleineren Durchmesser und der dem Flansch abgewandte Zylinder 202 den kleinsten Durchmesser hat. Auf Grund der unterschiedlichen Durchmesser sind zwischen den Zylindern Absätze 21 ausgebildet, die als Anschlagflächen 211 und 212 bezeichnet sind.

An seinem dem Flansch 8 abgewandten Ende ist die Mischarmatur 2 mit einem Aussengewinde 22 versehen, das in montiertem Zustand mit der Kopfmutter 6 korrespondiert. Von der dem Flansch 8 abgewandten Seite ist in die Mischarmatur 2 eine Bohrung 24 eingebracht, die einen Boden 241 aufweist. An ihrem dem Boden 241 abgewandten Ende ist in der Bohrung eine Nut 242 ausgebildet.

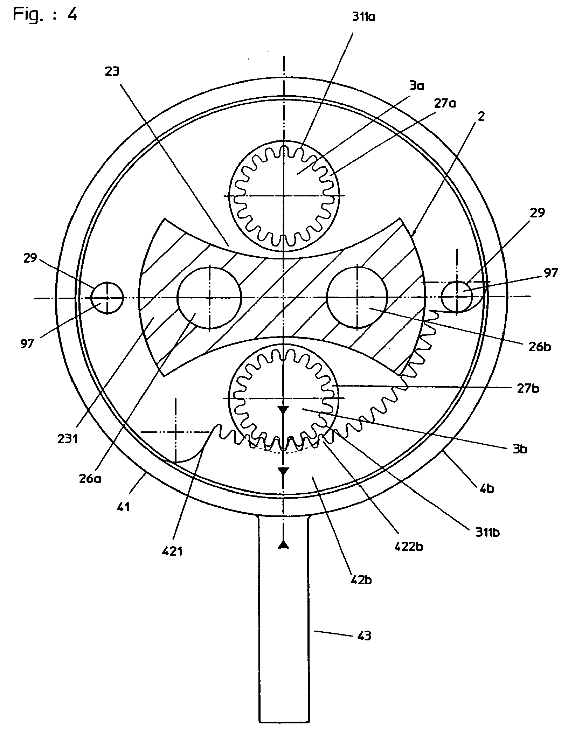

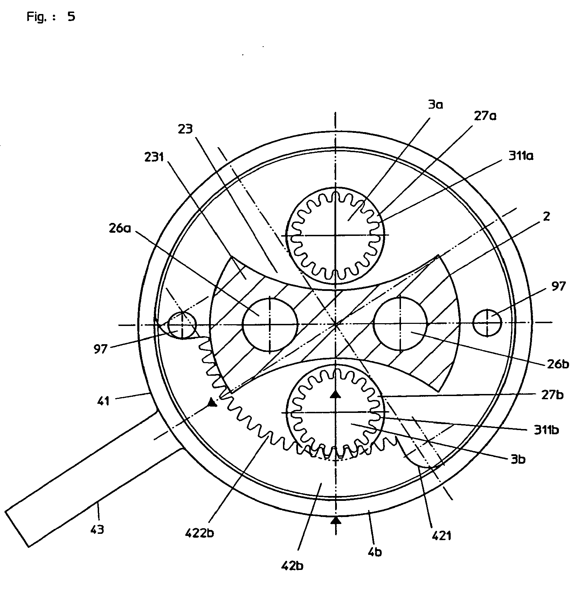

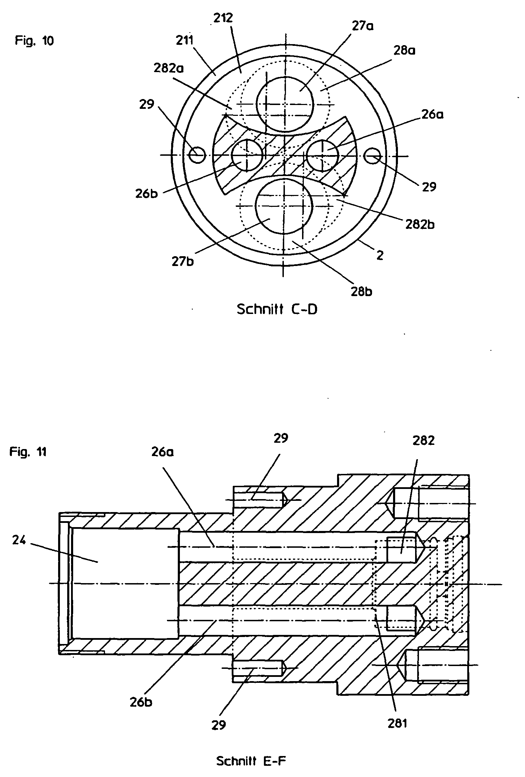

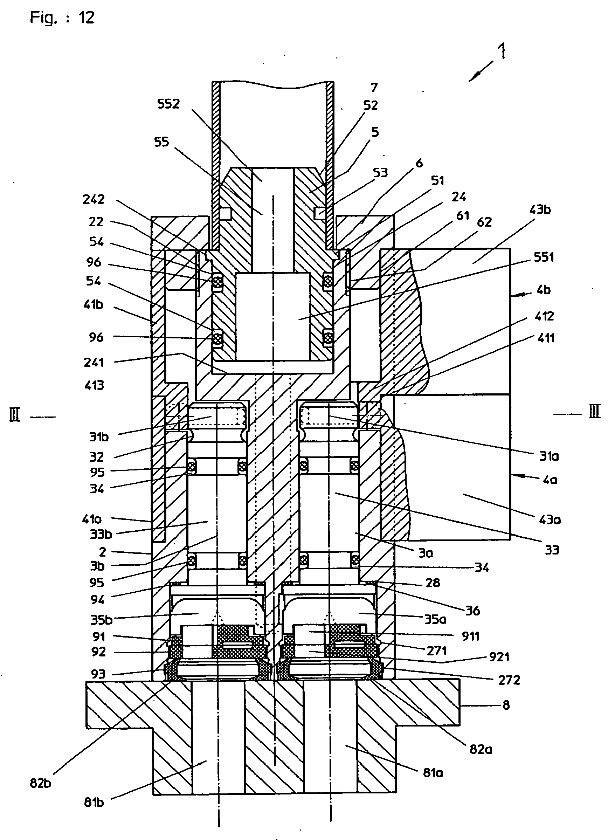

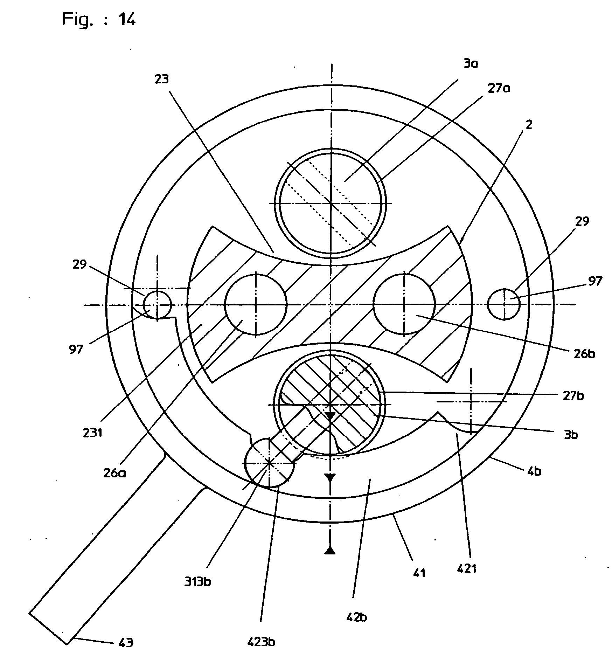

An dem dem Zylinder 201 zugewandten Ende sind in dem Zylinder 202 zwei sich gegenüberliegende Ausfräsungen 23 vorgesehen. Durch die Ausfräsungen 23 ist ein Steg 231 ausgebildet. Die Ausfräsungen 23 haben jeweils die Form eines Kreissegments, weshalb der Steg 231 in der Draufsicht eine konkave Form aufweist (Fig. 4, 5, 10, 13 und 14). Auf der Längsmittellinie des Steges 231 sind aussen benachbart zum Steg 231 Bohrungen 29 in den Zylinder 201 eingebracht, die Anschläge 97 aufnehmen (Fig. 11). Die Anschläge 97 können beispielsweise in Form von Kerb- oder Passstiften ausgebildet sein.

Der Steg 231 sowie die Zylinder 200 und 201 sind durchsetzt von zwei Bohrungen 26a, b. Die Bohrungen 26a, b erstrecken sich von dem dem Flansch 8 zugewandten Ende des Zylinders 200 bis zu dem Boden 241 der Bohrung 24, in die die Bohrungen 26a, b münden. Die Bohrungen 26a, b sind parallel zueinander ausgerichtet und gegenüberliegend auf einer der Quer-Mittellinien des Mischgehäuses 2 angeordnet.

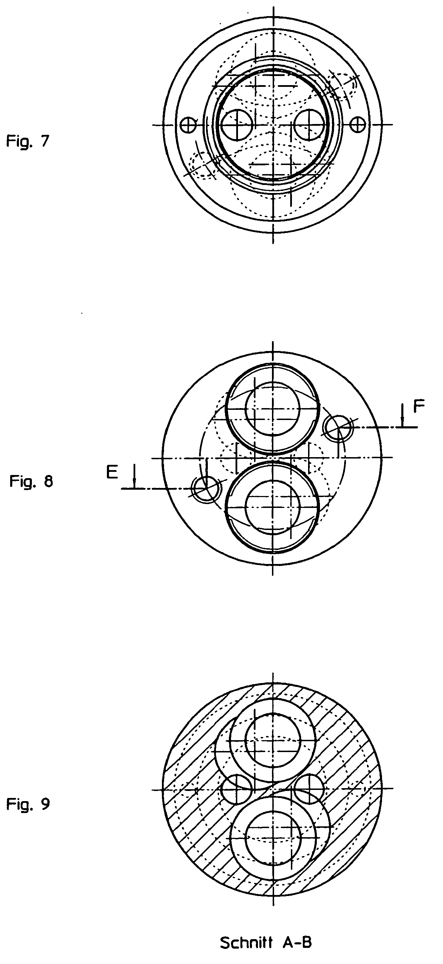

Die Zylinder 200 und 201 sind weiterhin von zwei Bohrungen 27a, b durchsetzt. Die Bohrungen 27a, b sind um 90° versetzt zu den Bohrungen 26a, b angeordnet (Fig. 4, 5, 9, 10, 13 und 14). Die Bohrungen 27a, b erstrecken sich von dem dem Flansch 8 zugewandten Ende der Mischarmatur 2 bis in den Bereich der Ausfräsungen 13 in Höhe der Anschlagflächen 212 des Zylinders 201. An ihrem dem Flansch zugewandten Ende sind in den Bohrungen 27a, b jeweils Nuten 271 und 272 ausgebildet. Die Nut 271 dient der Aufnahme einer Einlassscheibe 92; die Nut 272 der Aufnahme einer Lippendichtung 93. Die Bohrungen 27a, b sind im Bereich des Zylinders 200 abgesetzt ausgeführt, wodurch Bohrungen 28a, b mit grösserem Durchmesser hervorgerufen sind. Am Übergang der Bohrungen 27a, b und 28a, b sind Anschlagflächen 281 a, b ausgebildet. In den Bohrungen 28a, b sind Verbindungskammern 282a, b angeordnet, die in der Draufsicht sichelförmig sind (Figuren 7 bis 10). In den Kammern 282a, b enden die Bohrungen 26a, b, sodass eine Verbindung zwischen den Bohrungen 26a, b und 28a, b hervorgerufen ist.

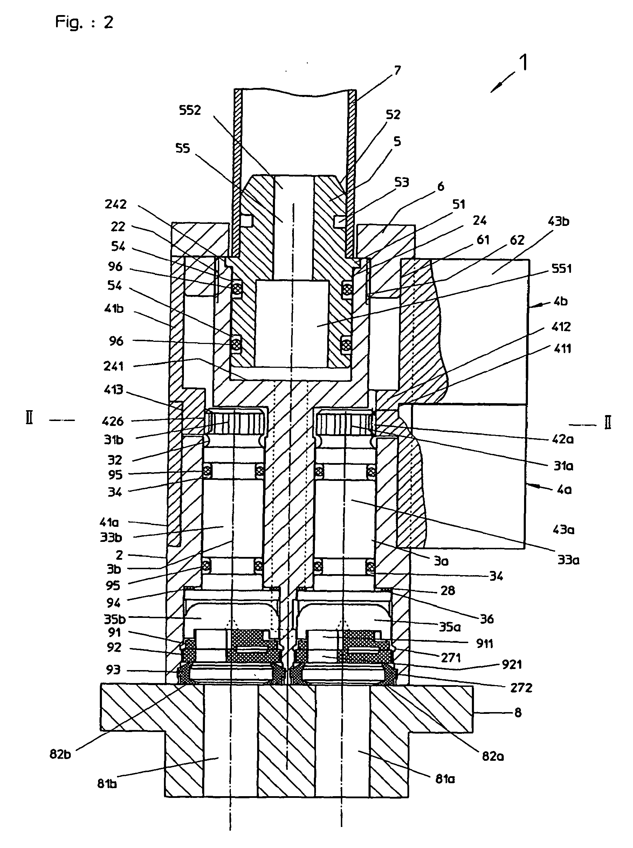

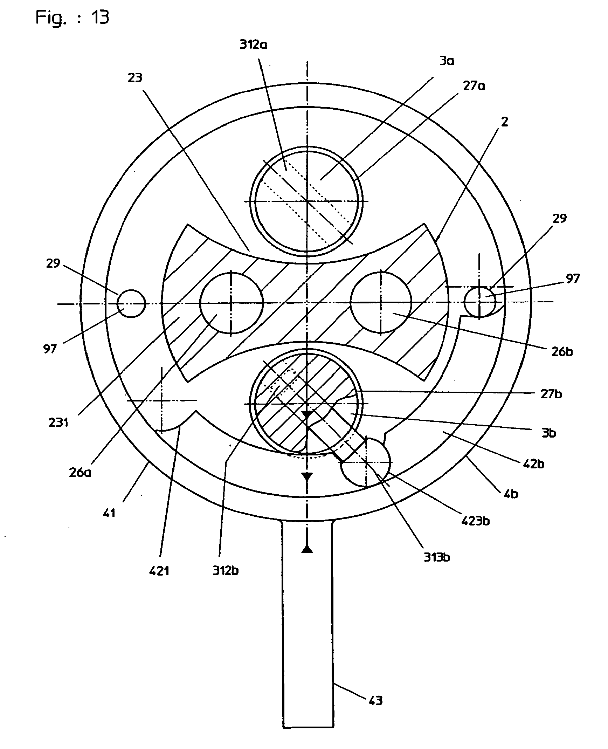

Die Spindeln 3a, b sind in den Bohrungen 27a, b angeordnet. Sie weisen jeweils an ihren dem Flansch 8 abgewandten Ende einen Spindelkopf 31a, b auf. Die Spindelköpfe 31 a, b sind im Ausführungsbeispiel nach den Figuren 2, 4 und 5 mit einer Verzahnung 311a, b versehen; im Ausführungsbeispiel nach den Figuren 12, 13 und 14 sind die Spindelköpfe 31 a, b verzahnungslos und mit einer radialen Bohrung 312a, b für die Aufnahme eines Kugelstiftes 313a, b versehen, der in der Bohrung 312a, b beweglich angeordnet ist.

In montiertem Zustand ragen die Spindelköpfe 31a, b in den Bereich der Ausfräsungen 23. Im Anschluss an die Spindelköpfe 31a, b sind die Spindeln 3a, b mit einem Freischnitt 32a, b versehen. An den Freischnitt 32a, b schliesst sich jeweils ein Zylinder 33a, b an, der unterbrochen ist von jeweils zwei Ringnuten 34a, b zur Aufnahme von O-Ringen 95, mit deren Hilfe die Spindeln 3a, b gegen das Mischergehäuse 2 abgedichtet sind. Im Anschluss an den Zylinder 33a, b ist an den Spindeln 3a, b ein im Durchmesser grösserer Steuerzylinder mit Mitnehmern 35a, b ausgebildet. Durch die Durchmessererweiterung ist eine Anschlagfläche 36a, b hervorgerufen, die an der Anschlagfläche 28a, b des Mischergehäuses 2 unter Zwischenschaltung einer Gleitscheibe 94 anliegt. Die Mitnehmer 35a, b dienen der Betätigung der Steuerscheibe 91.

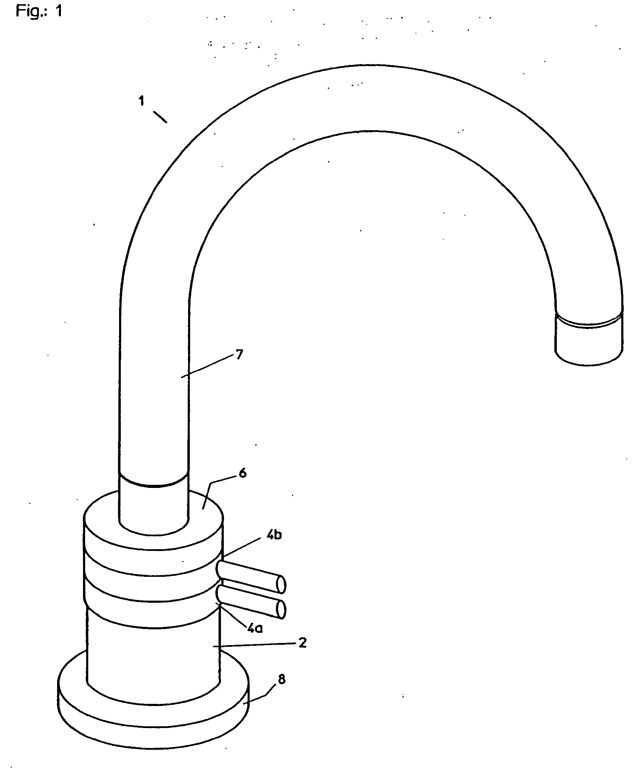

Die Drehhebel 4a, b sind im Wesentlichen nach Art eines Hohlzylinders 41 a, b ausgeführt. In der Draufsicht (Fig. 4, 5, 13 und 14) ist der Hohlzylinder als ringförmiger Teil zu erkennen, an den jeweils ein Griff 43a, b angeformt ist. Im Ausführungsbeispiel nach Figur 1 sind die Griffe 43a, b als Stifte ausgebildet; sie sind darüber hinaus auch in Form von Flügeln realisierbar (Fig. 2 und 12). Die Hohlzylinder 41 a, b umfassen die Absätze 201 und 202 des Mischergehäuses 2. Im Bereich der Ausfräsung 23 des Mischergehäuses 2 ist innen an dem Hohlzylinder 41 a ein Antriebskranz 42a ausgebildet, dessen Bogenlänge einem Drittel des inneren Kreisumfangs des Hohlzylinders 41 a entspricht. Der Antriebskranz 42a bildet mit dem Hohlzylinder 41 a eine Nut 411 aus. Der Hohlzylinder 41 b des Drehhebels 4b weist einen Innendruchmesser auf, der gleich dem Innendurchmesser des Hohlzylinders 41 a ist.

Der Hohlzylinder 41 b ist unmittelbar benachbart zum Hohlzylinder 41 a angeordnet. An seiner dem Hohlzylinder 41 a zugewandten Seite ist innen an dem Hohlzylinder 41 b ein Bund 412 angeformt, der in die Nut 411 des Drehhebels 4a eingreift. Auf der dem Antriebskranz 42a des Drehhebels 4a abgewandten Seite ist an dem Bund 412 ein Antriebskranz 42b angeordnet. Der Bund 412 einschließlich des Antriebskranzes 42b bildet mit dem Hohlzylinder 41 b eine Nut 413, in die der Hohlzylinder 41a mit seinem dem Flansch 8 abgewandten Ende eingesetzt ist. Die Bogenlänge des Antriebskranzes 42b entspricht derjenigen des Antriebskranzes 42a.

Beide Antriebskränze 42a, b weisen an ihren Enden jeweils eine Anschlagmulde 421 auf. Die Anschlagmulden 421 korrespondieren mit den Anschlägen 97. Durch das Zusammenspiel der Anschlagmulden 421 mit den Anschlägen 97 ist der Drehwinkel der Drehhebel 4a, b auf 60° oder 40° begrenzt. Auf Grund der gewählten Geometrie führt ein Anliegen der Anschlagmulden 421 der Antriebskränze 42a, b an dem jeweils gegenüberliegenden Anschlag 97 zu einer exakt übereinander ausgerichteten Stellung der Griffe 43 (Fig. 1, 2, 12). Dies resultiert aus der Anordnung als Aussenanschlag - im Ausführungsbeispiel durch die Anordnung der Anschläge 97 zwischen Zylinder 202 des Mischergehäuses 2 und den Hohlzylindern 41 a, b auf dem äussersten Bereich der Anschlagfläche 212.

Im Ausführungsbeispiel nach den Figuren 2, 4 und 5 sind die Antriebskränze 42a, b mit einer Verzahnung 422a, b versehen, die in montiertem Zustand in die Verzahnungen 311a, b der Spindeln 3a, b eingreifen. Die Verzahnungen 422a, b sind als Gradverzahnungen ausgebildet. Im Ausführungsbeispiel nach den Figuren 12, 13 und 14 ist in den Antriebskränzen 42a, b jeweils ein Kugelsitz 423a, b vorgesehen, in die die Kugelstifte 313a, b fassen. Die Kugelstifte 313a, b sind in den Kugelsitzen 323a, b beweglich gehalten.

Der Lotnippel 5 ist in die Bohrung 24 des Mischergehäuses 2 eingesetzt. Er ist rotationssymmetrisch ausgebildet und weist etwa mittig einen Bund 51 auf, der in montiertem Zustand in der Nut 242 der Bohrung 24 aufliegt. An seinem dem Flansch 8 abgewandten Ende ist der Lotnippel 5 aussen mit einer Fase 52 versehen. Benachbart zu der Fase 52 ist eine Ringnut 53 angeordnet. Auf der dem Flansch 8 zugewandten Seite ist im Anschluss an den Bund 51 der Lotnippel 5 zylindrisch ausgebildet, wobei zwei Ringnuten 54 zur Aufnahme von O-Ringen 96 vorgesehen sind. Mit Hilfe der O-Ringe 96 ist der Lotnippel 5 gegen das Mischergehäuse 2 abgedichtet. Der Lotnippel 5 ist von einer Bohrung 55 durchsetzt, die in zwei Bereiche unterschiedlichen Durchmessers aufgeteilt ist. Der Bereich grösseren Durchmessers dient dabei als Mischkammer 551, an den sich ein Auslauf 552, der einen kleineren Durchmesser als die Mischkammer 551 aufweist, anschliesst. Das freie Ende des Lotnippels 5 dient der Aufnahme des Auslaufrohrs 7, wobei die Fase 52 ein Überstülpen des Rohrs 7 erleichtert. Das dem Flansch 8 zugewandte Ende des Auslaufrohrs 7 stützt sich in montiertem Zustand auf dem Bund 51 ab.

Die Kopfmutter 6 ist rotationssymmetrisch ausgebildet. Sie weist aussen eine Führung 61 auf, in der der Hohlzylinder 41 b des Drehhebels 4b geführt ist. Innen ist sie mit einem Gewinde 62 versehen, das mit dem Aussengewinde 22 des Mischergehäuses 2 korrespondiert. Das Aufschrauben der Mutter 6 bewirkt eine Fixierung des Lotnippels 5 mit Auslaufrohr 7 sowie der Drehhebel 4a, b an dem Mischergehäuse 2.

Der Flansch 8 weist zwei Bohrungen 81a, b auf, die mit integrierten Anschlüssen für Warm- und Kaltwasser versehen sind. Die Bohrungen 81a, b fluchten mit den Bohrungen 27a, b des Mischergehäuses 2. Im Ausführungsbeispiel dient die Bohrung 81 a als Warmwasser-Zulauf; die Bohrung 81 b als Kaltwasser-Zulauf. Im Bereich des dem Mischergehäuses 2 zugewandten Endes ist der Flansch 8 mit ebenen Auflageflächen 82a, b versehen. Die Auflageflächen 82a, b stehen in Kontakt mit den Lippendichtungen 93, die in an sich bekannter Weise ausgebildet sind.

Die Steuerscheiben 91 sind drehfest in den Spindeln 3a, b angeordnet. Sie weisen jeweils eine Durchlassöffnung 911 auf. Bevorzugt sind die Steuerscheiben 91 aus Keramik hergestellt. Die Einlassscheiben 92 sind drehfest in dem Mischergehäuse 2 angeordnet. Sie weisen ebenfalls Durchlassöffnungen 921 auf und sind bevorzugt ebenfalls aus Keramik hergestellt. Auf der dem Flansch 8 zugewandten Seite stehen die Einlassscheiben 92 mit den Lippendichtungen 93 abgedichtet in Berührung.

In der Grundstellung "Mischarmatur geschlossen" stehen Steuerscheibe 91 und Einlassscheibe 92 der Spindeln 3a, b derart zueinander, dass die Durchlassöffnung 921 der jeweiligen Einlassscheibe 92 durch die zugeordnete Steuerscheibe 91 verschlossen ist. In dieser Stellung stehen die Griffe 43 der Drehhebel 4a, b exakt übereinander, wobei die Anschlagmulden 421 der Antriebskränze 42a, b gegenüberliegend an die Anschlagstifte 97 anschlagen. Wird der Griff 41 a im Uhrzeigersinn bewegt, so wird die Spindel 3a mit samt der vom Mitnehmer 35 aufgenommenen Steuerscheibe 91 über die Kombination der Verzahnungen 311a/422a bzw. die Kombination Kugelstift 313a/Kugelsitz 423a gleichgerichtet gedreht, wodurch die Durchlassöffnung 911 der Steuerscheibe 91 über die Durchlassöffnung 921 der Einlassscheibe 92 bewegt wird. Durch die Freigabe der Durchlassöffnungen strömt nun das Wasser an dem Mitnehmer 35a vorbei in die Bohrung 28a. Das Wasser erreicht von dort die Verbindungskammer 282a und strömt durch die Bohrungen 26a und 24 des Mischergehäuses 2 über die Bohrung 55 des Lotnippels 5 in das Auslaufrohr 7. In gleicher Weise kann durch Drehung des Drehhebels 4b das Wasser des zweiten Zulaufs über die Bohrung 28b mit Verbindungskammer 282b und die Bohrung 26b freigegeben werden. Die Mischung der beiden Wasserströmungen erfolgt im Bereich des Bodens 241 der Bohrung 24 sowie der Mischkammer 551 der Bohrung 55 im Lotnippel 5. Von dort gelangt das Gemisch durch den Auslauf 552 der Bohrung 55 des Lotnippels 5 in das Auslaufrohr 7. Das Mischungsverhältnis kann über die Stellungen der Griffe 43 der Drehhebel 4a, b deutlich wahrgenommen werden. Sind die Griffe 43 übereinander angeordnet, so liegt ein gleich verteiltes Mischungsverhältnis von Warm- und Kaltwasser vor.

## Patentansprüche

1. Mischarmatur (1) mit einem Mischergehäuse (2), in dem zwei drehbare Spindeln (3a, b) angeordnet sind, deren Drehwinkel durch Anschläge (97) begrenzt sind, und die jeweils mit einer Steuerscheibe (91) im Eingriff stehen, welche jeweils mit einer drehfesten Einlassscheibe (92) in Berührung steht, die mindestens eine Durchtrittsöffnung (921) aufweist, **dadurch gekennzeichnet, dass** die mit den Steuerscheiben (91) drehfesten Spindeln (3a,b) jeweils formschlüssig mit einem Drehhebel (4a, b) bedienbar sind, und dass die Spindeln (3a, b) mit Bohrungen (31 2a, b) zur Aufnahme von Kugelstiften (313a, b) versehen sind, die in Kugelsitze (423a, b) von Antriebskränzen (42a, b) fassen, die an den Drehhebeln (4a, b) ausgebildet sind.

2. Mischarmatur nach Anspruch 1, **dadurch gekennzeichnet, dass** die Anschläge (97) auf dem äusseren Bereich des Mischergehäuses (2) angeordnet sind.

3. Mischarmatur nach Anspruch 1 oder 2, **dadurch gekennzeichnet, dass** die Anschläge (97) zwischen einem Zylinder (202) des Mischergehäuses (2) und den Antriebskränzen (42a, b) der Drehhebel (4a, b) angeordnet sind.

4. Mischarmatur nach Anspruch 2 oder 3, **dadurch gekennzeichnet, dass** die Anschläge (97) durch Pass- oder Kerbstifte gebildet sind.

5. Mischarmatur nach Anspruch 4, **dadurch gekennzeichnet, dass** die Anschläge (97) in Bohrungen (29) eines Körpers (20) eingesetzt sind.

6. Mischarmatur nach einem der Ansprüche 1 bis 5, **dadurch gekennzeichnet, dass** die Drehhebel (4a, b) als Hohlzylinder (41 a, b) ausgeführt sind, auf deren Innenseite jeweils die Zahnkränze (42a, b) angeordnet sind.

7. Mischarmatur nach Anspruch 6, **dadurch gekennzeichnet, dass** die Bogenlänge der Zahnkränze (42a, b) etwa einem Drittel des Kreisumfangs der Innenwand des Hohlzylinders (41 a, b) der Drehhebel (4a, b) entspricht.

8. Mischarmatur nach einem der Ansprüche 1 bis 7, **dadurch gekennzeichnet, dass** ein Flansch (8) mit integrierten Anschlüssen für zwei Zuleitungen vorgesehen ist.

## Claims

1. Mixing valve (1) with a mixer housing (2) in which two rotatable spindles (3a, b) are located, whose angles of rotation are restricted by stops (97), and each of which engages with a control disk (91) which is in contact with a non-rotating inlet disk (92) which has at least one through opening (921), **characterised in that** the non-rotating spindles (3a, b) with the control disks (91) are operated by interlocking with a rotating lever (4a, b) and that the spindles (3a, b) have holes (312a, b) to receive ball pins (313a, b) which engage in ball seats (423a, b) of drive rims (42a, b) located on the rotating levers (4a, b).

2. Mixing valve according to claim 1, **characterised in that** the stops (97) are located on the outer part of the mixer housing (2).

3. Mixing valve according to claim 1 or 2, **characterised in that** the stops (97) are located between a cylinder (202) of the mixer housing (2) and the drive rims (42a, b) of the rotating lever (4a, b).

4. Mixing valve according to claim 2 or 3, **characterised in that** the stops (97) are formed by locating pins or grooved pins.

5. Mixing valve according to claim 4, **characterised in that** the stops (97) are inserted in holes (29) of a body (20).

6. Mixing valve according to one of the claims 1 to 5, **characterised in that** the rotating levers (4a, b) have the form of hollow cylinders (41 a, b) on the inside of which toothed rims (42a, b) are located.

7. Mixing valve according to claim 6, **characterised in that** the arc length of the toothed rims (42a, b) is equivalent to approximately one third of the circumference of the circle of the inside wall of the hollow cylinder (41 a, b) of the rotating lever (4a, b).

8. Mixing valve according to one of the claims 1 to 7, **characterised in that** a flange (8) with integrated connections for two infeed pipes is provided.

## Revendications

1. Robinet mélangeur (1) avec un corps mélangeur (2) dans lequel sont disposées deux broches rotatives (3a, b) dont les angles de rotation sont limités par des butées (97) et qui engrènent chacune avec un disque de commande (91), disque qui se trouve en contact respectivement avec un disque d'admission (92) résistant à la rotation, disque qui présente au moins un orifice de passage (921), **caractérisé en ce que** les broches (3a, b) résistantes à la rotation avec les disques de commande (91) sont pilotables chaque fois par adhérence des formes à l'aide d'une manette tournante (4a, b), et **en ce que** les broches (3a, b) sont dotées d'alésages (312a, b) servant à recevoir des tiges à bille (313a, b) logées dans des sièges à bille (423a, b) de couronnes motrices (42a, b), couronnes qui sont formées contre les manettes tournantes (4a, b).

2. Robinet mélangeur selon la revendication 1, **caractérisé en ce que** les butées (97) sont disposées sur la zone extérieure du corps mélangeur (2).

3. Robinet mélangeur selon la revendication 1 ou 2, **caractérisé en ce que** les butées (97) sont placées entre un cylindre (202) du corps mélangeur (2) et les couronnes motrices (42a, b) des manettes tournantes (4a, b).

4. Robinet mélangeur selon la revendication 2 ou 3, **caractérisé en ce que** les butées (97) sont formées par des goupilles d'ajustage ou goupilles cannelées.

5. Robinet mélangeur selon la revendication 4, **caractérisé en ce que** les butées (97) sont mises en place dans les alésages (29) d'un corps (20).

6. Robinet mélangeur selon l'une des revendications 1 à 5, **caractérisé en ce que** les manettes tournantes (4a, b) ont été réalisées sous forme de cylindres creux (41 a, b) sur le côté intérieur desquels sont agencées chaque fois les couronnes dentées (42a, b).

7. Robinet mélangeur selon la revendication 6, **caractérisé en ce que** la longueur de l'arc formé par les couronnes dentées (42a, b) représente environ un tiers de la circonférence de la paroi intérieure que comportent les cylindres creux (41 a, b) des manettes tournantes (4a, b).

8. Robinet mélangeur selon l'une des revendications 1 à 7, **caractérisé en ce qu'**est prévue une bride (8) à raccords intégrés destinée à recevoir deux conduites d'alimentation.
